# FASCICULE DE BREVET EUROPEEN

(11) **EP 2 590 046 B1**
(45) Date de publication et mention de la délivrance du brevet: **16.08.2017**
(21) Numéro de dépôt: 12191315.6
(22) Date de dépôt: 05.11.2012
(51) Int. Cl.: G05D 23/19

(54) **Ensemble de régulation climatique**
Klimaanlage
Climate control apparatus

(30) Priorité: 04.11.2011 FR 1160019
(43) Date de publication de la demande: 08.05.2013
(73) Titulaire: Société Muller & Cie, 75018 Paris (FR)
(72) Inventeur: Lemaire, Philippe, 02000 AULNOIS SOUS LAON (FR); Morard, Jean-Louis, 75018 PARIS (FR); Pourrat, Francois, 75018 PARIS (FR)
(74) Mandataire: Ipside

(56) Documents cités:
- EP-A1- 0 069 470
- US-A- 4 540 875
- US-A1- 2006 124 759
- US-A1- 2010 123 449

## Description

### DOMAINE TECHNIQUE DE L'INVENTION

La présente invention se rapporte à un ensemble de régulation climatique et à un procédé de fonctionnement d'un tel ensemble. Le domaine technique de l'invention est, d'une façon générale, celui des commandes d'appareils de régulation climatique. Plus particulièrement, l'invention concerne une commande déportée d'un appareil de chauffage électrique.

### ARRIERE PLAN TECHNOLOGIQUE DE L'INVENTION

Pour piloter, par transmission de consignes de régulation climatique, un moyen de réglage d'un moyen de régulation climatique d'un appareil de régulation climatique alimenté en électricité par une ligne d'alimentation électrique, on utilise généralement une commande déportée.

Dans l'état de la technique, la communication entre une telle commande et un tel appareil se fait
- soit via au moins un fil conducteur, de type bus par exemple, entièrement dédié à cette fonction, ce qui oblige à alimenter en électricité la commande indépendamment de l'appareil et complique l'installation de l'ensemble de régulation climatique,
- soit en utilisant des méthodes sans fil telles que celles de la radiofréquence, ces méthodes étant relativement coûteuses.

Le document US 2010/123449 décrit un dispositif de commande utilisant une ligne de puissance comme support de transmission d'une information de commande par la modulation de phase de l'alimentation de puissance.

Le document EP 0069470 décrit un dispositif de contrôle à distance d'appareils d'éclairage électriques utilisant une ligne d'alimentation électrique desdits appareils pour la transmission d'informations de commande, un utilisant une modulation pulsée d'une fréquence porteuse, supérieure à la fréquence du courant alternatif d'alimentation et injectée sur la ligne d'alimentation.

Le document US 4 540 875 décrit un dispositif de contrôle centralisé d'appareil électriques utilisant la ligne d'alimentation électrique desdites appareils pour la transmission d'informations de commande au moyen d'un signal à haute fréquence injecté sur cette ligne d'alimentation.

### DESCRIPTION GENERALE DE L'INVENTION

L'invention propose de résoudre au moins partiellement les problèmes techniques précédemment cités en utilisant un fil d'une ligne d'alimentation électrique pour transmettre des consignes entre une commande déportée et un appareil de régulation climatique.

L'invention a pour objet un procédé de fonctionnement mettant en oeuvre un ensemble de régulation climatique comportant un dispositif de commande d'un appareil de régulation climatique, ledit dispositif et ledit appareil étant disposés en série sur une même ligne d'alimentation électrique, ledit dispositif comportant un premier interrupteur d'alimentation électrique, une interface homme/machine adaptée à recevoir, de la part d'un utilisateur dudit ensemble, des consignes de régulation climatique, et un émetteur adapté à transmettre lesdites consignes à un dispositif de pilotage dudit appareil, ledit dispositif de pilotage étant adapté à recevoir, via un récepteur, lesdites consignes et à piloter un moyen de réglage d'un moyen de régulation climatique dudit appareil, lequel procédé comporte des étapes dans lesquelles
- lorsque le premier interrupteur est fermé, l'appareil est alimenté en électricité et le moyen de réglage est piloté,
- lorsque le premier interrupteur est ouvert, l'émetteur du dispositif de commande émet, via la ligne d'alimentation, lesdites consignes au récepteur de l'appareil.

Grâce à ces dispositions, le dispositif de commande n'a pas d'alimentation électrique propre, mais il extrait toute l'énergie électrique dont il a besoin sur la ligne d'alimentation électrique de l'appareil.

Selon des caractéristiques particulières, le premier interrupteur
- s'ouvre lorsque le dispositif de commande reçoit une consigne de régulation climatique de la part de l'utilisateur,
- se ferme lorsque le récepteur de l'appareil de régulation climatique a reçu ladite consigne.

Grâce à ces dispositions, l'alimentation électrique de l'appareil n'est interrompue que lorsque cela est nécessaire, c'est-à-dire lorsque le pilotage du moyen de régulation climatique doit être modifié.

Selon d'autres caractéristiques particulières, le premier interrupteur
- est fermé pendant des périodes d'alimentation du moyen de réglage
- est ouvert pendant des périodes de communication d'une durée fixe prédéterminée

Selon des caractéristiques particulières,
- lorsque la durée d'une période d'alimentation est inférieure ou égale à la soustraction de la durée d'une période de communication à son seuil de durée, le pilotage recommence à la fin dudit seuil,
- lorsque la durée de ladite période de régulation est strictement supérieure à la soustraction de la durée de la période de communication à son seuil de durée, le pilotage recommence à la fin de ladite période de communication.

Selon des caractéristiques particulières,
- l'appareil de régulation climatique est un appareil de chauffage comportant une sonde de température,
- les consignes de régulation climatique sont des températures de consigne.

Selon des caractéristiques particulières,
- la ligne d'alimentation électrique est une ligne de courant alternatif,
- le premier interrupteur est un triac,
- le dispositif de commande comporte en outre un dissipateur adapté à refroidir ledit triac.

Selon des caractéristiques particulières,
- l'émetteur comporte un deuxième interrupteur et présente une impédance variable,
- le dispositif de commande comporte en outre un transformateur d'intensité,
- lorsque ledit deuxième interrupteur est fermé, la valeur de ladite impédance est sensiblement inférieure à sa valeur lorsqu'il est ouvert.

Selon des caractéristiques particulières, les consignes de régulation climatique sont codées, de façon binaire, par le dispositif de commande et décodées par l'appareil de régulation climatique.

Selon des caractéristiques particulières,
- la ligne d'alimentation présente une tension nominale d'amplitude déterminée,
- le codage des consignes de régulation est tel que
   - lorsque le bit vaut un, l'émetteur émet un signal d'amplitude proche de celle de ladite tension nominale,
   - lorsque le bit vaut zéro, l'émetteur émet un signal d'amplitude inférieure à l'amplitude du signal quand le bit vaut un.

Les inventeurs ont déterminé que ces dispositions étaient optimales.

Les avantages, buts et caractéristiques particuliers de ce procédé étant similaires à ceux de l'ensemble de chauffage électrique objet de la présente invention, ne sont pas rappelés ici.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- figure 1 : une représentation schématique d'une vue d'ensemble d'un mode de réalisation d'un ensemble de régulation climatique selon l'invention;
- figure 2 : une représentation, sous forme d'un logigramme, d'un premier mode de réalisation d'un procédé de fonctionnement de l'ensemble de régulation climatique selon l'invention;
- figure 3: une représentation schématique d'un deuxième mode de réalisation du procédé de fonctionnement de l'ensemble de régulation climatique selon l'invention.

Dans ces figures, les éléments identiques conservent les mêmes références.

### DESCRIPTION DETAILLEE DES FORMES DE REALISATION PREFEREES DE L'INVENTION

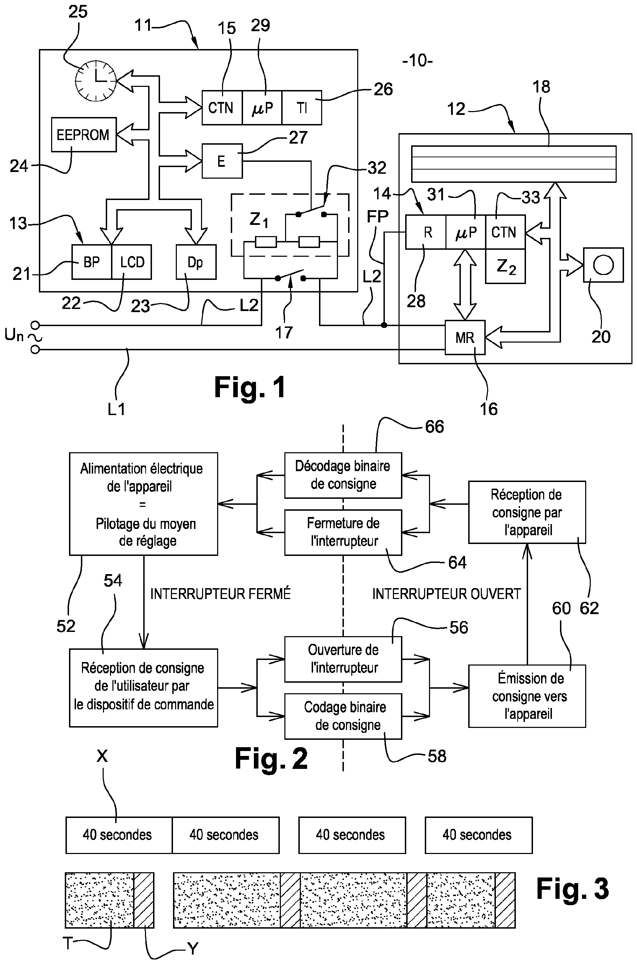

La figure 1 représente, de façon schématique, une vue d'ensemble d'un mode de réalisation de l'ensemble de régulation climatique 10 selon l'invention.

L'ensemble de régulation climatique 10 comporte un dispositif de commande déportée 11 d'un appareil de régulation climatique 12, ledit dispositif et ledit appareil étant disposés en série sur une même ligne d'alimentation électrique (L1 ; L2).

Le dispositif 11 comporte un premier interrupteur 17 d'alimentation électrique, un premier microcontrôleur 29, une interface homme/machine 13 adaptée à recevoir, de la part d'un utilisateur de l'ensemble 10, et à afficher notamment des consignes de régulation climatique, et un émetteur 27 adapté à transmettre lesdites consignes à l'appareil 12.

L'appareil 12 comporte un dispositif de pilotage 14 adapté à piloter, en fonction des consignes, un moyen de réglage 16 d'un moyen de régulation climatique 18 dudit appareil, ledit moyen de régulation étant directement alimenté en électricité par la ligne d'alimentation électrique (L1 ; L2).

Plus précisément, le dispositif de pilotage 14 comporte un récepteur 28 et un deuxième microcontrôleur 31 adaptés respectivement à recevoir les consignes et à les appliquer au moyen de réglage 16. Typiquement, l'appareil de régulation climatique 12 est installé dans un lieu au moins partiellement clos.

L'émetteur 27 comporte un deuxième interrupteur 32 et présente une impédance Z₁ variable. L'appareil de régulation climatique 12 présente une impédance Z₂ constante. Lorsque le deuxième interrupteur 32 est fermé, la valeur de l'impédance Z₁ est sensiblement inférieure, c'est-à-dire de l'ordre quelques ohms, à sa valeur lorsqu'il est ouvert, c'est-à-dire de l'ordre de plusieurs dizaines de kiloohms. Ainsi, on crée un diviseur de tension via l'impédance Z₂ de l'appareil 12 et on obtient une tension d'alimentation d'amplitude variable pouvant être décodée, en état binaire, par le microcontrôleur 31 dudit appareil. La ligne d'alimentation électrique (L1 ; L2) est ici une ligne biphasée de courant alternatif présentant une tension nominale Un d'amplitude déterminée. Dans une variante, cette ligne peut être monophasée.

Autrement dit, le codage des consignes de régulation est tel que
- lorsque le bit vaut un, l'émetteur 27 émet un signal d'amplitude proche de celle de ladite tension nominale Un,
- lorsque le bit vaut zéro, l'émetteur 27 émet un signal d'amplitude inférieure à l'amplitude du signal quand le bit vaut un.

Dans l'exemple décrit ici, le dispositif de commande 11 est contenu dans un boîtier en plastique sensiblement parallélépipédique, de section carrée et d'une épaisseur d'environ 35mm, les côtés du carré présentant une longueur d'environ 110mm. La ligne L2 entre et sort du boîtier par la face arrière dudit boîtier. Un fil pilote FP relie directement le récepteur 28 à la ligne L2 de la ligne d'alimentation de manière à dériver les consignes codées audit récepteur lorsque l'interrupteur 17 est ouvert.

Dans ce mode de réalisation, l'appareil de régulation climatique 12 est un appareil de chauffage. Les consignes de régulation climatique sont alors des températures de consigne qui sont comparées, par le microcontrôleur 31, à des mesures de température, de manière à détecter et à corriger tout dysfonctionnement. Dans l'exemple, ces mesures sont réalisées par une sonde 33 de température, de type à Coefficient de Température Négatif (CTN), de l'appareil de chauffage 12 et le moyen de réglage 16 est un triac qui s'ouvre et se ferme par intermittence en fonction de ces mesures de manière à régler le moyen de régulation 18 qui peut se matérialiser sous la forme d'une résistance. Autrement dit, l'interaction entre la sonde 33, le microcontrôleur 31 et le moyen de réglage 16 correspond au fonctionnement d'un thermostat classique. Alternativement, le moyen de réglage pourrait être un gradateur de puissance.

Dans une première variante, l'appareil de régulation climatique est un appareil de climatisation et les consignes de régulation sont également des températures.

Dans une deuxième variante, l'appareil de régulation climatique est un appareil de ventilation et les consignes de régulation sont des vitesses de rotation dudit appareil.

Dans l'exemple décrit ici, l'appareil de chauffage 12 comporte un voyant 20 de chauffe. Le dispositif de commande 11 comporte un transformateur d'intensité 26, un compteur de temps 25 de type horloge, un détecteur de fréquence non représenté et une sonde 15 de température ambiante de type CTN. Le premier interrupteur 17 est un triac et le dispositif de commande 11 comporte un dissipateur 23, par exemple en aluminium, adapté à refroidir ledit triac. La sonde 15 est positionnée dans le bas du boîtier, dans le flux d'air de refroidissement du dissipateur 23 et permet d'afficher sur l'interface homme/machine 13 la température ambiante qu'elle mesure.

Le détecteur de fréquence agit automatiquement à la mise sous tension du dispositif 11 de manière à basculer en 50Hz ou en 60Hz.

Un utilisateur du dispositif de commande 11 peut régler la température ambiante du lieu dans un intervalle de température compris par exemple entre 3°C et 30°C, avec une précision de plus ou moins 0,1°C.

De préférence, l'interface homme/machine 13 comporte quatre boutons poussoir 21 et un écran LCD 22 à trente-six segments rétroéclairés. Un premier bouton poussoir sert à allumer ou éteindre le dispositif de commande 11. Un deuxième et un troisième boutons poussoir servent respectivement à augmenter et à diminuer des consignes de régulation climatique. Un quatrième bouton poussoir permet de sélectionner un mode de fonctionnement parmi plusieurs modes de fonctionnements stockés dans une mémoire 24 par exemple de type EEPROM (Electrically-erasable programmable read-only memory en anglais). La mémoire 24 permet à l'ensemble de régulation climatique 10 de conserver un même mode de fonctionnement à la suite d'une coupure d'alimentation électrique. Lors d'un appui sur un des boutons poussoirs 21, mis à part sur le premier bouton 21 lorsque le dispositif 11 est déjà allumé, le rétroéclairage est activé pour une période de l'ordre de trois secondes. Un appui permanent sur un des deuxième et troisième boutons poussoir 21 déclenche un auto-incrément avec une fréquence de 2Hz.

Le dispositif de commande 11 propose de choisir, à l'aide du quatrième bouton poussoir, trois modes de fonctionnement, par exemple dans l'ordre suivant : mode confortable, mode économique ou mode automatique.

Le mode confortable permet de choisir une température ambiante, typiquement élevée, à l'aide des deuxième et troisième boutons poussoir, pour une durée illimitée, avec une incrémentation de 0,5°C ou 1°F.

Le mode économique permet de choisir une température ambiante, typiquement basse, pendant une durée ajustable comprise entre une heure et quatre-vingt-dix-neuf heures, avec une incrémentation d'une heure.

Le mode automatique permet d'appliquer le mode économique pendant une durée ajustable comprise entre une heure et vingt-trois heures, puis d'appliquer le mode confortable pendant le temps restant, pour un cycle de vingt-quatre heures.

Le mode choisi reste affiché sur l'écran jusqu'à ce que l'utilisateur appuie brièvement sur un des deuxième et troisième boutons poussoir 21 et déclenche l'éclairage de l'affichage rétro-éclairé ou qu'il appuie sur le premier bouton poussoir 21 pour éteindre le dispositif 11. Après un appui bref sur un des deuxième et troisième boutons 21 le mode choisi réapparaît au bout de deux secondes.

Pour étalonner la température de la sonde 33 de l'appareil 12, l'utilisateur doit appuyer pendant au moins trois secondes sur le quatrième bouton. La température de consigne en cours s'affiche alors en clignotant et il lui suffit d'appuyer sur un des deuxième et troisième boutons 21 pour la régler, puis d'appuyer à nouveau sur le quatrième bouton 21 pour la valider et donc arrêter le clignotement et revenir à l'affichage du mode de fonctionnement au relâchement dudit bouton.

Pour modifier la durée d'application des modes de fonctionnement, l'utilisateur doit appuyer pendant au moins trois secondes sur un des deuxième et troisième boutons poussoir 21. La durée s'affiche alors en clignotant et il lui suffit d'appuyer à nouveau sur un de ces boutons 21 pour la régler, puis d'appuyer sur le quatrième bouton 21 pour la valider.

Un appui d'au moins trois secondes sur un des deuxième et troisième boutons verrouille tous les boutons 21. La même opération permet le déverrouillage.

Quand les boutons 21 sont verrouillés, un appui sur l'un d'eux provoque l'affichage d'un message spécifique.

Pour choisir l'unité de température entre degrés Celsius et degrés Fahrenheit, l'utilisateur doit appuyer, lorsque le dispositif est éteint, simultanément sur le premier bouton 21 et le deuxième bouton 21 pendant au moins trois secondes. Le changement d'unité se fait en arrondissement de 0,5°C ou 1°F.

Pour connaître la température mesurée par la sonde 15, l'utilisateur doit appuyer, lorsque le dispositif est éteint, simultanément sur le premier bouton 21 et le troisième bouton 21 pendant au moins trois secondes. La même opération permet de revenir à l'état initial.

La figure 2 représente, sous forme d'un logigramme, un premier mode de réalisation d'un procédé de fonctionnement de l'ensemble 10 de régulation climatique selon l'invention.

Le procédé comporte des étapes dans lesquelles
- lorsque l'interrupteur 17 est fermé, l'appareil 12 est alimenté en électricité 52 et le moyen de réglage 16 est piloté,
- lorsque l'interrupteur 17 est ouvert, l'émetteur 27 du dispositif de commande 11 émet 60, via la ligne d'alimentation (L1 ; L2), lesdites consignes au récepteur 28 de l'appareil 12,
- l'interrupteur 17 s'ouvre 56 lorsque le dispositif de commande 11 reçoit 54 une consigne de régulation climatique de la part de l'utilisateur,
- l'interrupteur 17 se ferme 64 lorsque le récepteur 28 de l'appareil 12 a reçu 62 ladite consigne.
- les consignes de régulation climatique sont codées 58, de façon binaire, par le dispositif de commande 11 et décodées 66 par le microcontrôleur 31 de l'appareil 12.

La figure 3 représente, de façon schématique, un deuxième mode de réalisation du procédé de fonctionnement de l'ensemble 10 de régulation climatique selon l'invention.

Dans ce mode de réalisation, le dispositif de commande 11 impose des coupures d'alimentation de l'appareil 12. Typiquement, le premier interrupteur 17
- est fermé pendant des périodes d'alimentation T d'une durée variable mais inférieure à un seuil de durée prédéterminé X, par exemple quarante secondes,
- est ouvert pendant des périodes de communication Y d'une durée fixe prédéterminée.

Lorsque la durée d'une période d'alimentation T du moyen de réglage 16 est inférieure ou égale à la soustraction de la durée d'une période de communication Y à son seuil de durée X, c'est-à-dire lorsque T≤X-Y, alors le pilotage recommence à la fin dudit seuil X. Dans ce cas, le voyant 20 de chauffe est allumé uniquement pendant la période d'alimentation T.

Lorsque, au contraire, la durée de ladite période de régulation T est strictement supérieure à la soustraction de la durée de la période de communication Y à son seuil de durée X, c'est-à-dire lorsque T>X-Y, alors le pilotage recommence à la fin de ladite période de communication Y. Dans ce cas, le voyant 20 de chauffe est constamment allumé.

Dans un troisième mode de réalisation, non représenté, du procédé selon l'invention, le dispositif de commande attend, pour émettre des consignes de régulation climatique, que la ligne d'alimentation électrique de l'appareil de régulation climatique soit libre, autrement dit que le pilotage soit interrompu, c'est-à-dire quand l'intensité est nulle. Dans ces conditions, si le temps d'attente est trop long, c'est-à-dire supérieur à un seuil prédéfini, alors le dispositif de commande s'impose en coupant la ligne d'alimentation de l'appareil.

Dans les revendications, le mot "comportant" n'exclut pas d'autres éléments ou étapes, et l'article indéfini "un" ou "une" n'exclut pas une pluralité. Le simple fait que les différentes caractéristiques soient récitées dans les revendications dépendantes mutuellement différentes n'indique pas que la combinaison de ces caractéristiques ne peut être avantageusement utilisée.

## Revendications

1. Procédé de gestion d'un ensemble de régulation climatique (10), ledit ensemble comportant un appareil de régulation climatique (12) et un dispositif de commande (11) dudit appareil, ledit dispositif et ledit appareil étant disposés en série sur une même ligne d'alimentation électrique (L1, L2), ledit dispositif comportant un premier interrupteur (17) d'alimentation électrique, une interface homme/machine (13) adaptée à recevoir, de la part d'un utilisateur dudit ensemble, des consignes de régulation climatique, et un émetteur (27) adapté à transmettre lesdites consignes à un dispositif de pilotage (14) dudit appareil, ledit dispositif de pilotage étant adapté à recevoir, via un récepteur (28), lesdites consignes et à piloter un moyen de réglage (16) d'un moyen de régulation climatique (18) dudit appareil,
le procédé étant **caractérisé en ce que** :
- lorsque le premier interrupteur (17) est fermé, l'appareil est alimenté en électricité (52) et le moyen de réglage est piloté,
- lorsque le premier interrupteur (17) est ouvert, l'émetteur du dispositif de commande émet (60), via la ligne d'alimentation, lesdites consignes au récepteur de l'appareil,
et **en ce que** ledit premier interrupteur
- s'ouvre (56) lorsque le dispositif de commande reçoit (54) une consigne de régulation climatique de la part de l'utilisateur,
- se ferme (64) lorsque le récepteur de l'appareil de régulation climatique reçoit (62) ladite consigne.

2. Procédé selon la revendication 1, tel que
- les consignes de régulation climatique sont codées (58), de façon binaire, par le dispositif de commande et décodées (66) par l'appareil de régulation climatique.

3. Procédé selon la revendication 2, tel que :
- la ligne d'alimentation présente une tension nominale (Un) d'amplitude déterminée,
- le codage des consignes de régulation est tel que :
- lorsque le bit vaut 1, l'émetteur émet un signal d'amplitude proche de celle de ladite tension nominale,
- lorsque le bit vaut 0, l'émetteur émet un signal d'amplitude inférieure à l'amplitude du signal quand le bit vaut 1.

4. Ensemble de régulation climatique (10), ledit ensemble comportant un appareil de régulation climatique (12) et un dispositif de commande (11) dudit appareil, ledit dispositif et ledit appareil étant disposés en série sur une même ligne d'alimentation électrique (L1, L2), ledit dispositif comportant un premier interrupteur (17) d'alimentation électrique, une interface homme/machine (13) adaptée à recevoir, de la part d'un utilisateur dudit ensemble, des consignes de régulation climatique, et un émetteur (27) adapté à transmettre lesdites consignes à un dispositif de pilotage (14) dudit appareil, ledit dispositif de pilotage étant adapté à recevoir, via un récepteur (28), lesdites consignes et à piloter un moyen de réglage (16) d'un moyen de régulation climatique (18) dudit appareil, ledit ensemble étant muni de moyens de mise en oeuvre d'un procédé selon l'une des revendication 1 à 3.

5. Ensemble selon la revendication 4, **caractérisé en ce que**
- l'appareil de régulation climatique est un appareil de chauffage comportant une sonde de température (33),
- les consignes de régulation climatique sont des températures de consigne.

6. Ensemble selon l'une des revendications 4 à 5, **caractérisé en ce que**
- la ligne d'alimentation électrique est une ligne de courant alternatif,
- le premier interrupteur est un triac,
- le dispositif de commande comporte en outre un dissipateur (23) adapté à refroidir ledit triac.

7. Ensemble selon l'une des revendications 4 à 6, **caractérisé en ce que**
- l'émetteur comporte un deuxième interrupteur (32) et présente une impédance variable (Z1),
- le dispositif de commande comporte en outre un transformateur d'intensité (26),
- lorsque ledit deuxième interrupteur est fermé, la valeur de ladite impédance est sensiblement inférieure à sa valeur lorsqu'il est ouvert.

## Patentansprüche

1. Verfahren zur Verwaltung einer Klimaanlage (10), wobei die Anlage eine Klimaregelungsvorrichtung (12) und eine Einrichtung (11) zur Steuerung der Vorrichtung umfasst, wobei die Einrichtung und die Vorrichtung in Reihe an einer gleichen Stromversorgungsleitung (L1, L2) angeordnet sind, wobei die Einrichtung einen ersten Ein/Aus-Schalter (17), eine Mensch/Maschine-Schnittstelle (13), die dazu ausgelegt ist, von einem Benutzer der Anlage Einstellwerte für die Klimaregelung zu empfangen, und einen Sender (27), der dazu ausgelegt ist, die Einstellwerte zu einer Ansteuerungseinrichtung (14) der Vorrichtung zu senden, umfasst, wobei die Ansteuerungseinrichtung dazu ausgelegt ist, über einen Empfänger (28) die Einstellwerte zu empfangen und ein Einstellmittel (16) eines Klimaregelungsmittels (18) der Vorrichtung anzusteuern,
wobei das Verfahren **dadurch gekennzeichnet ist, dass**:
- wenn der erste Schalter (17) geschlossen ist, die Vorrichtung mit Elektrizität (52) versorgt wird und das Einstellmittel angesteuert wird,
- wenn der erste Schalter (17) geöffnet ist, der Sender der Steuerungseinrichtung über die Versorgungsleitung die Einstellwerte zu dem Empfänger der Vorrichtung sendet (60),
und dadurch, dass sich der erste Schalter
- öffnet (56), wenn die Steuerungseinrichtung einen Klimaregelungseinstellwert von dem Benutzer empfängt (54),
- schließt (64), wenn der Empfänger der Klimaregelungsvorrichtung den Einstellwert empfängt (62).

2. Verfahren nach Anspruch 1, wobei:
- die Einstellwerte für die Klimaregelung durch die Steuerungseinrichtung binär kodiert (58) werden und durch die Klimaregelungsvorrichtung dekodiert (66) werden.

3. Verfahren nach Anspruch 2, wobei:
- die Versorgungsleitung eine Nennspannung (Un) mit bestimmter Amplitude aufweist,
- die Kodierung der Einstellwerte für die Regelung so ist, dass:
- wenn das Bit auf 1 liegt, der Sender ein Signal mit einer Amplitude nahe der der Nennspannung aussendet,
- wenn das Bit auf 0 liegt, der Sender ein Signal mit einer kleineren Amplitude als die Amplitude des Signals, wenn das Bit auf 1 liegt, aussendet.

4. Klimaanlage (10), wobei die Anlage eine Klimaregelungsvorrichtung (12) und eine Einrichtung (11) zur Steuerung der Vorrichtung umfasst, wobei die Einrichtung und die Vorrichtung in Reihe an einer gleichen Stromversorgungsleitung (L1, L2) angeordnet sind, wobei die Einrichtung einen ersten Ein/AusSchalter (17), eine Mensch/Maschine-Schnittstelle (13), die dazu ausgelegt ist, von einem Benutzer der Anlage Einstellwerte für die Klimaregelung zu empfangen, und einen Sender (27), der dazu ausgelegt ist, die Einstellwerte zu einer Ansteuerungseinrichtung (14) der Vorrichtung zu senden, umfasst, wobei die Ansteuerungseinrichtung dazu ausgelegt ist, über einen Empfänger (28) die Einstellwerte zu empfangen und ein Einstellmittel (16) eines Klimaregelungsmittels (18) der Vorrichtung anzusteuern, wobei die Anlage mit Mitteln zur Durchführung eines Verfahrens nach einem der Ansprüche 1 bis 3 versehen ist.

5. Anlage nach Anspruch 4, **dadurch gekennzeichnet, dass**
- die Klimaregelungsvorrichtung eine Heizvorrichtung ist, die eine Temperatursonde (33) umfasst,
- die Einstellwerte für die Klimaregelung Einstelltemperaturen sind.

6. Anlage nach einem der Ansprüche 4 bis 5, **dadurch gekennzeichnet, dass**
- die Stromversorgungsleitung eine Wechselstromleitung ist,
- der erste Schalter ein Triac ist,
- die Steuerungseinrichtung des Weiteren einen Kühlkörper (23) umfasst, der dazu ausgelegt ist, den Triac abzukühlen.

7. Anlage nach einem der Ansprüche 4 bis 6, **dadurch gekennzeichnet, dass**
- der Sender einen zweiten Schalter (32) umfasst, und eine variable Impedanz (Z1) aufweist,
- die Steuerungseinrichtung des Weiteren einen Stromwandler (26) umfasst,
- wenn der zweite Schalter geschlossen ist, der Impedanzwert wesentlich geringer als sein Wert, wenn er geöffnet ist, ist.

## Claims

1. Method for managing a climate regulation assembly (10), said assembly comprising a climate regulation apparatus (12) and a control device (11) for said apparatus, said device and said apparatus being arranged in series on one and the same electrical power supply line (L1, L2), said device comprising a first electrical power supply switch (17), a human/machine interface (13) suitable for receiving, from a user of said assembly, climate regulation setpoints, and a transmitter (27) suitable for transmitting said setpoints to a driving device (14) for said apparatus, said driving device being suitable for receiving, via a receiver (28), said setpoints and for driving a setting means (16) of a climate regulation means (18) of said apparatus,
the method being **characterized in that**:
- when the first switch (17) is closed, the apparatus is supplied with electricity (52) and the setting means is driven,
- when the first switch (17) is open, the transmitter of the control device transmits (60), via the power supply line, said setpoints to the receiver of the apparatus,
and **in that** said first switch
- is opened (56) when the control device receives (54) a climate regulation setpoint from the user,
- is closed (64) when the receiver of the climate regulation apparatus receives (62) said setpoint.

2. Method according to Claim 1, such that
- the climate regulation setpoints are coded (58), in binary, by the control device and decoded (66) by the climate regulation apparatus.

3. Method according to Claim 2, such that:
- the power supply line has a nominal voltage (Un) of determined amplitude,
- the coding of the regulation setpoints is such that:
- when the bit is at one, the transmitter transmits a signal of amplitude close to that of said nominal voltage,
- when the bit is at 0, the transmitter transmits a signal of amplitude lower than the amplitude of the signal when the bit is at 1.

4. Climate regulation assembly (10), said assembly comprising a climate regulation apparatus (12) and a control device (11) for said apparatus, said device and said apparatus being arranged in series in one and the same electrical power supply line (L1, L2), said device comprising a first electrical power supply switch (17), a human/machine interface (13) suitable for receiving, from a user of said assembly, climate regulation setpoints, and a transmitter (27) suitable for transmitting said setpoints to a driving device (14) for said apparatus, said driving device being suitable for receiving, via a receiver (28), said setpoints and for driving a setting means (16) of a climate regulation means (18) of said apparatus, said assembly being provided with means for implementing a method according to one of Claims 1 to 3.

5. Assembly according to Claim 4, **characterized in that**
- the climate regulation apparatus is a heating apparatus comprising a temperature probe (33),
- the climate regulation setpoints are setpoint temperatures.

6. Assembly according to one of Claims 4 and 5, **characterized in that**
- the electrical power supply line is an alternating current line,
- the first switch is a triac,
- the control device further comprises a heat sink (23) suitable for cooling said triac.

7. Assembly according to one of Claims 4 to 6, **characterized in that**
- the transmitter comprises a second switch (32) and has a variable impedance (Z1),
- the control device further comprises a current transformer (26),
- when said second switch is closed, the value of said impedance is substantially lower than its value when it is open.
